# EUROPEAN PATENT SPECIFICATION

(11) **EP 1 775 454 B1**
(45) Date of publication and mention of the grant of the patent: **31.08.2016**
(21) Application number: 06122167.7
(22) Date of filing: 12.10.2006
(51) Int. Cl.: F02D 41/40, F02D 41/24

(54) **Controller of Common Rail fuel injection system**
Regler für Common-Rail-Kraftstoffeinspritzsystem
Régulateur pour système d'injection à rampe commune

(30) Priority: 13.10.2005 JP 2005298442; 23.02.2006 JP 2006046223
(43) Date of publication of application: 18.04.2007
(73) Proprietor: DENSO CORPORATION, Kariya-city, Aichi-pref., 448-8661 (JP)
(72) Inventor: IMAI, Minoru, Kariya-city Aichi 448-8661 (JP)
(74) Representative: TBK

(56) References cited:
- EP-A2- 1 344 923
- WO-A1-2004/090315
- WO-A1-2005/021952
- WO-A1-2005/021953
- DE-A1- 10 305 525
- DE-A1- 19 712 143
- DE-A1- 19 937 148

## Description

The present invention relates to a controller of a common rail fuel injection system according to the preamble of claim 1, the features of which are known from e.g. document DE 103 05 525 A1 or document WO 2005/021952 A1.

A common rail fuel injection system accumulates fuel in a common rail at high pressure corresponding to fuel injection pressure. The common rail fuel injection system injects and supplies the high-pressure fuel accumulated in the common rail to an engine through a fuel injection valve. In injection control, an injection amount and injection timing of the fuel are calculated based on an operation condition of the engine. A fuel injection rate (valve opening degree) and an injection period are determined in accordance with the injection amount and the fuel pressure in the common rail.

In recent years, in order to increase engine output efficiency or to improve exhaust emission, multiple injection for performing multiple injections of the fuel in one combustion cycle with one fuel injection valve is performed by performing a pilot injection before a main injection or a post-injection after the main injection, for example. In the case where the multiple injection is performed, an interval time between the injections is set based on the operation condition of the engine.

In the case where the multiple injection is performed, there is a possibility that the fuel injection amount of the latter injection varies due to the former injection. It is because the fuel pressure in the common rail pulsates in accordance with the valve opening operation or the valve closing operation of the fuel injection valve. Conventionally, for example, as described in JP-A-H10-266888, the injection period of the latter injection is corrected by using the injection amount of the former injection and the interval time as parameters.

However, injection characteristics of the actual fuel injection valve vary due to an instrumental error or temporal change (aging). Accordingly, the actual interval time during the fuel injection deviates from the interval time set based on the operation condition of the engine. The desired fuel injection cannot be performed due to the deviation in the interval time, so the exhaust emission varies with respect to an ideal state.

It is the object of the present invention to provide a controller of a common rail fuel injection system capable of inhibiting degradation of fuel injection control accuracy due to a deviation in an interval time between injections in multiple injection and of reducing deterioration of exhaust emission.

The object of the invention is achieved by a controller according to claim 1. Advantageous embodiments are carried out according to the dependent claims.

According to an aspect of the present invention, a controller of a common rail fuel injection system estimates an actual fuel injection amount injected from a fuel injection valve and calculates a control deviation time of an interval time between adjacent injections of the multiple injection based on a difference between the actual fuel injection amount and a present injection amount command value. The controller corrects a control parameter of fuel injection control using the fuel injection valve based on the control deviation time of the interval time.

A common rail fuel injection system accumulates fuel in a common rail at high pressure corresponding to fuel injection pressure and supplies the accumulated fuel to the engine through a fuel injection valve. The fuel injection control of the common rail fuel injection system is performed by using the fuel injection valve. In the common rail fuel injection system, pulsation is caused in the fuel pressure in the common rail by valve opening operation and valve closing operation of the fuel injection valve during the fuel injection. Therefore, in the case where multiple injection control is performed to inject the fuel multiple times in one combustion cycle of the engine, the latter injection is controlled in consideration of the pulsation of the fuel pressure caused by the former injection.

However, injection characteristics of the actual fuel injection valve vary due to an instrumental error or temporal change (aging). Therefore, the actual interval time between the former injection and the latter injection deviates from the interval time set in the fuel injection control. The injection amount of the latter injection varies due to the deviation of the interval time.

According to the present invention, the control deviation time is calculated as the deviation in the interval time based on the difference between the actual fuel injection amount and the injection amount command value corresponding to the present target value of the fuel injection amount. The control parameter of the fuel injection control using the fuel injection valve is corrected based on the control deviation time. Thus, the desired fuel injection is enabled, so the deterioration of the fuel injection accuracy due to the deviation of the interval time is inhibited. As a result, deterioration of the exhaust emission is inhibited.

Features and advantages of embodiments will be appreciated, as well as methods of operation and the function of the related parts, from a study of the following detailed description, the appended claims, and the drawings, all of which form a part of this application. In the drawings:
Fig. 1 is a schematic structural diagram showing an engine control system according to a first example embodiment of the present invention;
Fig. 2 is a graph showing pulsation of the fuel pressure and influence of a difference in an interval time over fuel injection;
Fig. 3 is a diagram showing correlation between a deviation time in the interval time and an injection amount deviation;
Fig. 4 is a block diagram for estimating the injection amount deviation according to the Fig. 1 embodiment;
Fig. 5 is a flowchart showing processing steps of fuel injection control according to the Fig. 1 embodiment;
Fig. 6 is a flowchart showing processing steps of correction value calculation processing according to the Fig. 1 embodiment;
Fig. 7 is a graph showing a deviation of the interval time;
Fig. 8 is a diagram showing correlation data in a standard state; and
Fig. 9 is a flowchart showing processing steps of correction value calculation processing according to a second example embodiment of the present invention.

Now, a first example embodiment of the present invention will be explained in reference to drawings. The present embodiment defines an engine control system of a multi-cylinder diesel engine as a vehicular engine. The control system performs fuel pressure feedback control, fuel injection control and the like by mainly using an electronic control unit (ECU).

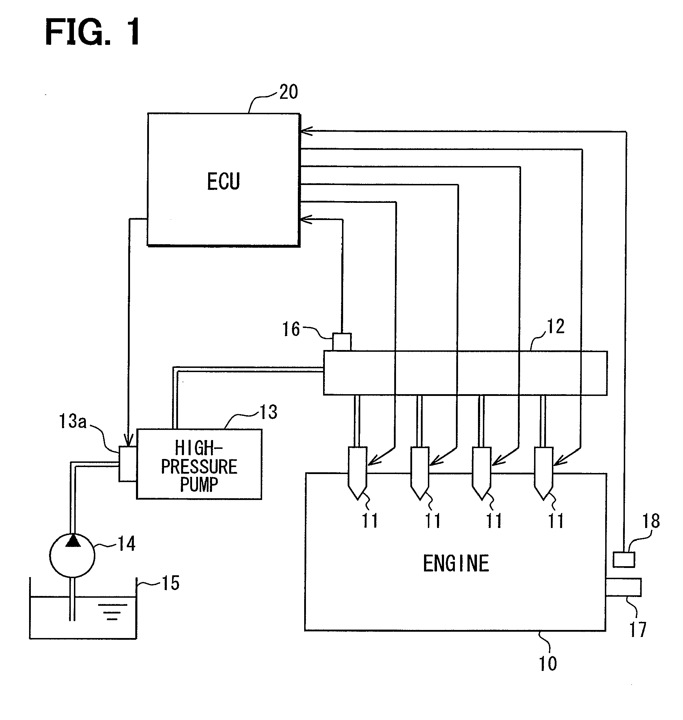

Referring to Fig. 1, a common rail fuel injection system according to a first example embodiment of the present invention is illustrated. As shown in Fig. 1, electromagnetic injectors 11 are mounted in respective cylinders of a multi-cylinder diesel engine 10. The injectors 11 are connected to a common rail (pressure accumulation pipe) 12 common to the cylinders. The injector 11 has a three-way electromagnetic valve, for example. The injector 11 injects the fuel in accordance with sliding movement of a nozzle needle in a nozzle body of the injector 11. The common rail 12 is connected with a high-pressure pump 13 as a fuel supply pump. The high-pressure pump13 is provided with an electromagnetic suction control valve (SCV) 13a in a fuel suction section thereof. The SCV 13a is connected with a fuel tank 15 through a feed pump 14. Low-pressure fuel drawn by the feed pump 14 from the fuel tank 15 is metered by the SCV 13a and is suctioned into the high-pressure pump 13. In accordance with the drive of the high-pressure pump 13, the fuel pressure at high pressure corresponding to fuel injection pressure is continuously accumulated in the common rail 12.

The common rail 12 is provided with a common rail pressure sensor 16 for sensing fuel pressure (common rail pressure) P in the common rail 12. The common rail 12 is provided with an electromagnetic (or mechanical) pressure reduction valve (not shown). The pressure reduction valve is opened to perform pressure reduction if the fuel pressure P increases excessively.

A rotation speed sensor 18 for sensing rotation speed of a crankshaft 17 of the engine 10 is provided near the crankshaft 17. The rotation speed sensor 18 is an electromagnetic pickup sensor for sensing passing of teeth of a timing rotor provided integrally with the crankshaft 17. Waveform shaping of the sensing signal of the rotation speed sensor 18 is performed to generate a pulse-shaped rotation speed signal (NE pulse). In the present embodiment, an angle interval of the NE pulse, i.e., an angle between rising edges of the pulses, is 30°CA (crank angle), so the rotation speed NE can be sensed in the cycle of 30°CA.

An electronic control unit (ECU) 20 includes a microcomputer of a known-structure having CPU, ROM, RAM, EEPROM and the like. Sensing signals of various sensors such as the common rail pressure sensor 16, the rotation speed sensor 18, an accelerator position sensor and a vehicle speed sensor are serially inputted into the ECU 20. The ECU 20 executes various control programs stored in the ROM to perform fuel pressure feedback control of the common rail 12, fuel injection control and the like.

The ECU 20 calculates optimum fuel injection amount Q and injection timing based on the engine operation information such as the engine rotation speed NE and the accelerator position in the fuel injection control. The ECU 20 decides a fuel injection rate (valve opening degree) R and an injection period in accordance with the injection amount Q and the fuel pressure P in the common rail 12. If an injection signal S based on the information is outputted to the injector 11, the injector 11 performs the fuel injection to the engine 10.

In the fuel injection control, multiple injection is performed to selectively perform multiple injections out of a pilot injection, a pre-injection, a main injection, an after injection and a post-injection with one injector 11. In this case, it is determined which injections should be performed based on the engine operation information. In the case where the multiple injection is performed, the fuel injection amount that should be injected in one combustion cycle is distributed to the respective injections, and an interval time between the injections, i.e., an interval time from the start of the former injection to the start of the latter injection, is decided. The multiple injection exerts following effects. The pilot injection injects a minute amount of the fuel to expedite mixing of the fuel and the air immediately before ignition. The pre-injection shortens a delay of ignition timing after the main injection to inhibit generation of nitrogen oxides and to reduce a combustion sound and vibration. The main injection generates the output torque of the engine 10. The after injection burns particulate matters again. The post-injection controls temperature of the exhaust gas to regenerate an after-treatment device of the diesel engine such as a diesel particulate filter (DPF).

If the injector 11 is used for a long term, the injection characteristics change, for example, because sliding portions are degraded by abrasion of the nozzle needle and the like. Accordingly, an injection start delay or an injection end delay varies, and the interval time of the actual injection deviates from the set interval time. The injection operation of the injector 11 causes pulsation of the fuel pressure P in the common rail 12. Therefore, the fuel injection amount of the latter fuel injection varies due to the pulsation of the fuel pressure P caused by the former injection if the interval time deviates.

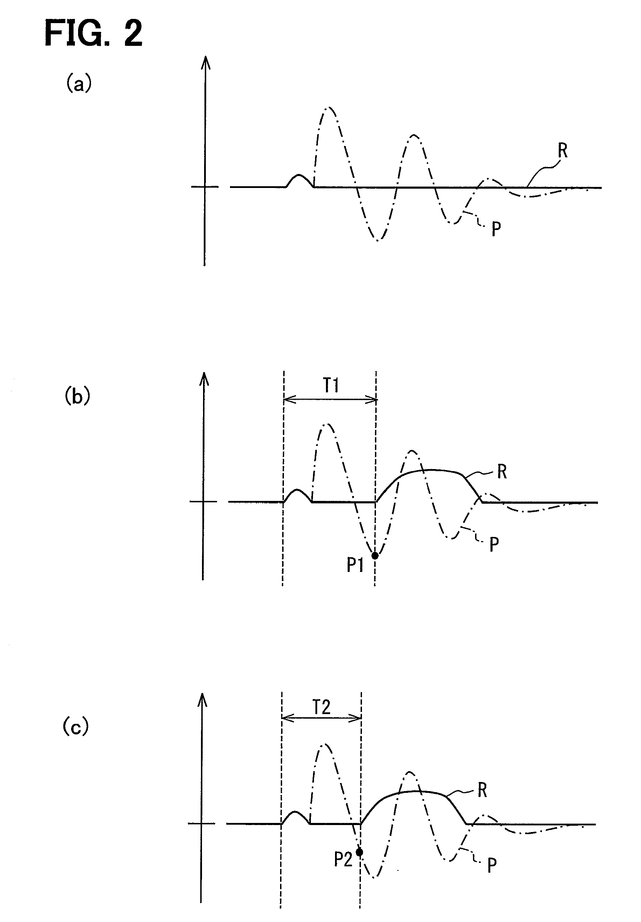

Fig. 2 shows the fuel pressure pulsation in the common rail 12 and an influence of the difference in the interval time on the fuel injection. Fig. 2(a) shows the pulsation of the fuel pressure P in the common rail 12 due to the injection operation of the injector 11. Figs. 2(b) and 2(c) show the pulsation of the fuel pressure P due to the former injection and the influence of the difference of the interval time on the latter injection.

As shown in Fig. 2(a), the fuel pressure P in the common rail 12 increases in accordance with the valve closing operation of the injector 11 when the fuel injection ends. Thereafter, the fuel pressure P gradually attenuates while oscillating in a certain cycle decided by factors such as the fuel pressure P in the common rail 12 and the fuel temperature.

In Fig. 2(b), the latter injection is performed at the end of the interval time T1, so the injection is started at fuel pressure P1. If the interval time changes from T1 to T2, the fuel injection is started at fuel pressure P2 as shown in Fig. 2(c). The fuel pressure P in the common rail 12 as of the start of the latter injection differs between Figs. 2(b) and 2(c). As a result, a difference is caused in the fuel injection amount.

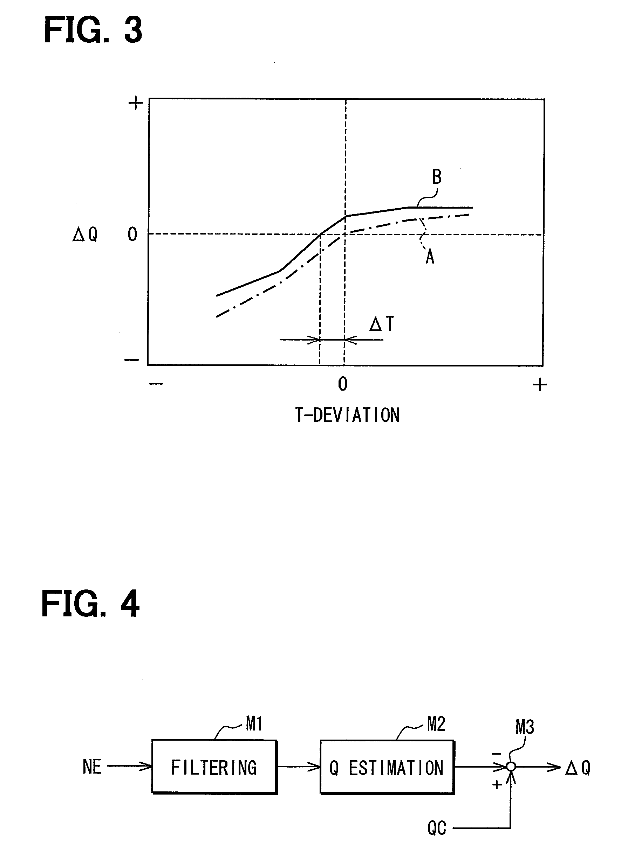

Fig. 3 shows a correlation between the deviation of the interval time T and the fuel injection amount deviation ΔQ. In the present embodiment, a command value in the injection signal S for injecting the optimum fuel injection amount calculated based on the engine operation information is used as an injection amount command value QC. The injection amount deviation ΔQ is a difference of the actual injection amount Q with respect to the injection amount command value QC. In Fig. 3, a solid line A shows correlation data in a predetermined standard state and a chained line B shows correlation data in an aged state, in which the sliding portions of the injector 11 have degraded, for example. The standard state is a state in which there is no deviation in the interval time T at the time when control parameters of the fuel injection control are adjusted. The standard state corresponds to an initial state of the injector 11.

In the standard state, if the interval time T based on the engine operation information is given, i.e., when the deviation time is zero, the fuel injection based on the injection amount command value QC is performed, so the injection amount deviation ΔQ is zero. If a deviation time (changing time) is intentionally given to the interval time T, the injection amount deviation ΔQ is generated. In the aged state, even if the interval time T based on the engine operation information is given, i.e., even when the deviation time is zero, a deviation is caused in the actual interval time T due to the change in the injection characteristics of the injector 11, so the injection amount deviation ΔQ is caused.

Therefore, the time difference in the deviation time of the interval time T between the standard state and the aged state in the case where the injection amount deviation ΔQ is zero is used as a control deviation time. In the example shown in Fig. 3, the control deviation time is the time difference ΔT.

In the present embodiment, the actual injection amount Q is estimated by using a method described below, and the injection amount deviation ΔQ is calculated as a difference of the actual injection amount Q with respect to the injection amount command value QC. Fig. 4 is a block diagram for estimating the injection amount Q and for calculating the injection amount deviation ΔQ. In Fig. 4, a filtering device M1 is provided by a band-pass filter (BPF) using central frequencies of a crankshaft frequency and the half of the crankshaft frequency. The crankshaft frequency corresponds to two times of a camshaft frequency in the case of a four-cylinder engine.

If the fuel injection amount Q of the injector 11 varies, the combustion torque generated in the cylinders of the engine 10 varies. At that time, combustion torque of each cylinder emerges in the engine rotation speed NE as instantaneous rotation speed. Therefore, the filter processing of the engine rotation speed NE is performed by the filtering device M1 to obtain a combustion torque corresponding value from the instantaneous rotation speed. Then, an injection amount estimation device M2 converts the combustion torque corresponding value into the fuel injection amount Q. Then, an injection amount deviation calculation device M3 calculates the injection amount deviation ΔQ by calculating a difference of the fuel injection amount Q with respect to the injection amount command value QC.

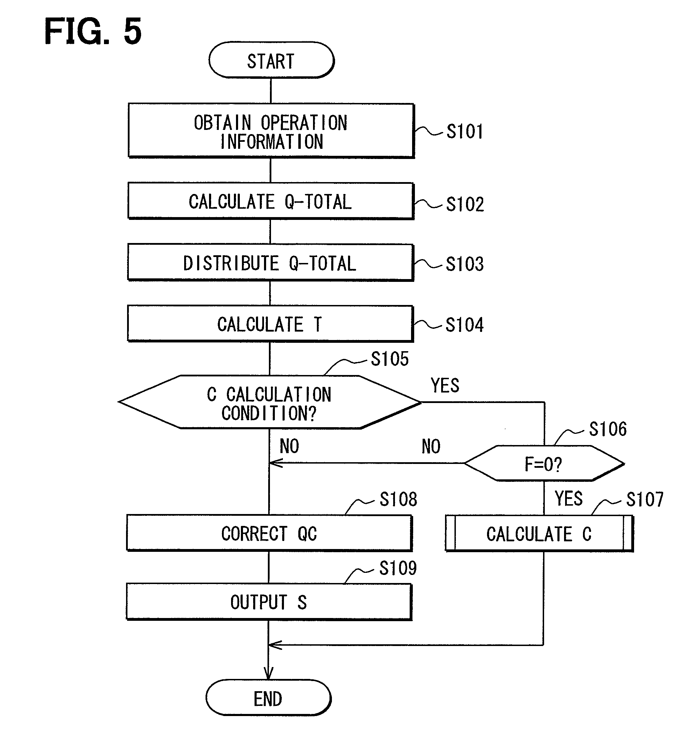

Fig. 5 is a flowchart showing processing steps of the fuel injection control.

In the fuel injection control, double injection of the pilot injection and the main injection is performed as the multiple injection. The processing of the fuel injection control is performed for each injector 11 mounted in each one of the multiple cylinders of the multi-cylinder engine 10. The ECU 20 executes the processing in a predetermined cycle.

First, Step S101 obtains the engine rotation speed NE and the accelerator position as the operation information from the various sensors. Then, Step S102 calculates a total injection amount Q-TOTAL based on the obtained operation information. Then, Step S103 distributes the total injection amount Q-TOTAL to the pilot injection as a former injection and the main injection as a latter injection based on the engine rotation speed NE and the like. Step S104 calculates an interval time T between the pilot injection and the main injection based on the engine rotation speed NE and the like.

Step S105 determines whether idling operation after completion of warm-up of the engine 10 is in progress to determine whether a condition for calculating a correction value C is satisfied. The determination of the completion of warm-up of the engine 10 is performed to calculate the correction value C in a state in which the output of the engine 10 is stable. The determination of the idling operation is performed to reduce the influence of the correction value calculation processing over the operation of the engine 10. If the answer to Step S105 is YES, the process goes to Step S106. Step S106 determines whether a completion flag F is zero in order to ascertain incompletion of the correction value calculation processing. The processing of the fuel injection control according to the present embodiment uses the completion flag F to indicate the incompletion or completion of the correction value calculation. The completion flag F is cleared to zero when the ECU 20 performs initialization and is set at one if the correction value C is calculated.

If the answers to Steps S105 and S106 are YES, Step S107 performs the correction value calculation processing. In the correction value calculation processing, the fuel injection is performed by intentionally changing the interval time T by a predetermined time and a control deviation time ΔT is obtained in the state. At the same time, the correction value C of the injection amount command value QC is calculated.

If the answer to Step S105 or Step S106 is NO, i.e., when it is a normal period, the process goes to Step S108. Step S108 corrects the injection amount command value QC based on the correction value C read into the RAM. The correction value C calculated through the correction value calculation processing is stored in a backup memory and is read into the RAM during the initialization operation performed when the power is inputted to the ECU 20. Then, Step S109 outputs the injection signal S to the injector 11. Thus, the processing of the fuel injection control is ended.

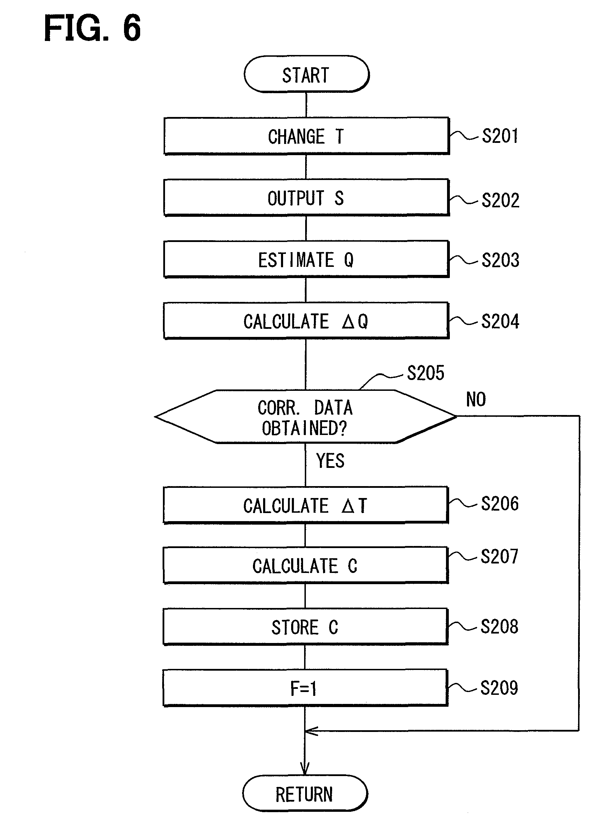

Fig. 6 is a flowchart showing processing steps of the correction value calculation processing. In the correction value calculation processing, the interval time T is deviated intentionally, and the injection amount deviation ΔQ at the time is calculated. The relationships between the deviation time of the interval time T and the injection amount deviation ΔQ are obtained as correction data. Then, the control deviation time ΔT for bring the injection amount deviation ΔQ to zero is calculated based on the correlation data, and the correction value C of the injection amount command value QC is calculated.

First, Step S201 changes the interval time T between the injections. Then, Step S202 outputs the injection signal S, in which the interval time T is changed, to the injector 11. Then, Step S203 estimates the fuel injection amount Q based on the engine rotation speed NE by using the filtering device such as a band-pass filter. Step S204 calculates the injection amount deviation ΔQ from the difference between the estimated fuel injection amount Q and the injection amount command value QC.

Step S205 determines whether the obtainment of the correlation data between the deviation time of the interval time and the injection amount deviation ΔQ is completed. More specifically, Step S205 determines whether the correlation data necessary for obtaining the control deviation time ΔT for bringing the injection amount deviation ΔQ to zero is obtained. If the answer to Step S205 is NO, the correction amount calculation processing is ended once, and the correlation data between the deviation time of the interval time and the injection amount deviation ΔQ is obtained by further changing the interval time T in subsequent processing.

If the answer to Step S205 is YES, Step S206 calculates the control deviation time ΔT. Then, Step S207 calculates the correction value C of the injection amount command value QC of the fuel injection control of the injector 11. Step S208 writes the correction value C into a backup memory such as the EEPROM or the standby RAM. Step S209 sets the completion flag F at one (F=1 ). Then, the correction value calculation processing is ended.

The present embodiment exerts following excellent effects.

The actual fuel injection amount injected from the injector 11 is estimated and the control deviation time of the interval time is calculated based on the difference between the actual injection amount and the injection amount command value at that time. Thus, the deviation in the interval time can be grasped. By correcting the injection amount command value based on the control deviation time, excess or deficiency of the fuel injection amount due to the deviation of the interval time can be reduced. Thus, the deterioration of the fuel injection accuracy due to the deviation of the interval time can be inhibited and the desired fuel injection can be performed. As a result, the deterioration of the exhaust emission can be inhibited. The fluctuation of the engine output, which can be caused by the deterioration of the fuel injection accuracy, can be inhibited, so the desired engine output can be obtained.

The correlation between the interval time and the injection amount deviation is obtained when the control deviation time is calculated. The control deviation time of the interval time is calculated from the correlation. Thus, the deviation in the interval time can be grasped more accurately. The control deviation time is calculated from the difference between the correlation in the standard state and the correlation in the aged state. Accordingly, the change of the tendency of the correlation can be also obtained with regard to the deviation of the interval time.

The control deviation time of the interval time is calculated and the correction value of the injection amount command value is calculated for each injector 11 of the cylinder. Thus, the excess or deficiency of the fuel injection amount due to the deviation in the interval time can be reduced in consideration of the instrumental difference or the temporal change of the injection characteristic of each injector 11 for each cylinder.

Next, processing according to a second example embodiment of the present invention will be described in reference to drawings.

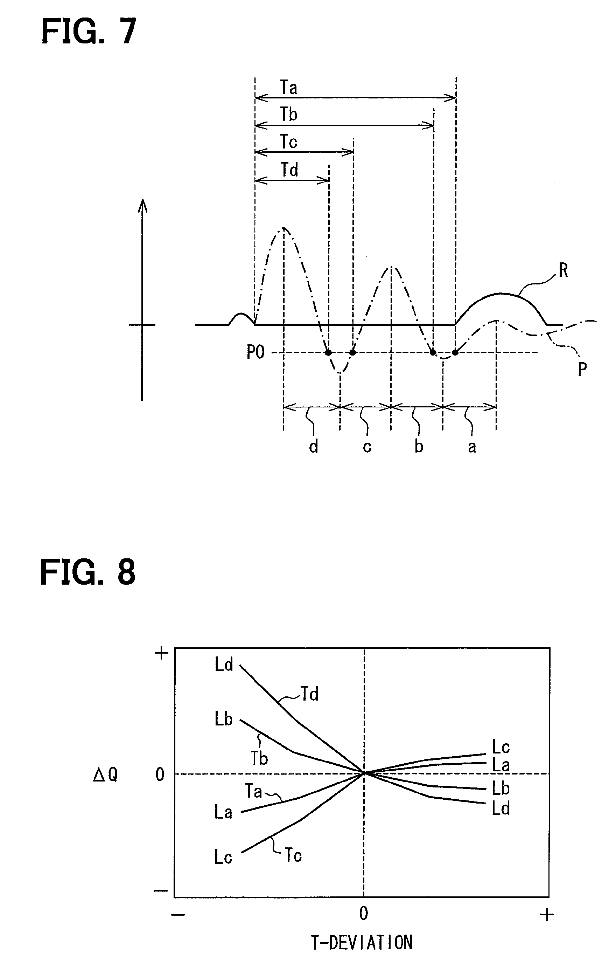

The fuel amount actually injected in the latter injection is decided by the fuel pressure P as of the start of the latter injection. The fuel pressure P in the common rail pulsates due to the former injection. Accordingly, if the interval time T deviates largely in the aged state, following problems can be caused. In an example shown in Fig. 7, the interval time T is adjusted to Ta. The fuel pressure P0 at the start of the latter injection started at the end of the adjusted interval time Ta is the same as the fuel pressure P0 at the end of each one of interval times Tb, Tc, Td as shown in Fig. 7. If the interval time T deviates largely in the aged state such that the interval time T becomes one of interval times Tb, Tc, Td, the actual fuel injection amount Q substantially coincides with the fuel injection amount Q as of the adjustment. Therefore, if the actual interval time T coincides with or is near one of the interval times Tb, Tc, Td, there is a possibility that the control deviation time ΔT is calculated erroneously.

Therefore, in the present embodiment, the correlation data in the standard state corresponding to multiple interval times providing the same fuel pressures as of the start of the latter injection are obtained beforehand. Each one of the interval times Ta, Tb, Tc, Td providing the same fuel pressure at the start of the latter injection exists in each one of four sections a, b, c, d among positive and negative peaks of the pulsation of the fuel pressure P as shown in Fig. 7. Fig. 8 is a diagram showing the correlation data in the standard state. The correlation data La, Lb, Lc, Ld correspond to the interval times Ta, Tb, Tc, Td respectively. In the present embodiment, the control deviation time ΔT is calculated based on the correlation data in the standard state corresponding to the multiple interval times T and the correlation data in the aged state. The tendency of the correlation data in the standard state differs among the interval times T Therefore, the control deviation time ΔT is calculated based on the correlation data in the standard state having the same tendency.

As described above, the pulsating mode of the fuel pressure P such as the cycle or the attenuation coefficient is substantially decided by the injection amount of the former injection and the fuel pressure P as of the former injection. More accurately, the pulsating mode of the fuel pressure P is influenced by the fuel temperature. However, the influence is negligible because the fuel temperature becomes substantially constant after the completion of the warm-up. The pulsating modes of the fuel pressure in the respective sections are similar to each other. By obtaining the correlation data in the standard state corresponding to the interval time of at least one section, the correlation data can be converted into the correlation data in the standard state corresponding to the interval time of the other section by using the specific cycle and attenuation coefficient. The correlation data in the standard state also change with the operation state of the engine. By converting the correlation data in the standard state obtained beforehand by using the injection amount and the fuel pressure as of the former injection decided by the present engine operation information, the correlation data in the standard state in the arbitrary operation state can be obtained.

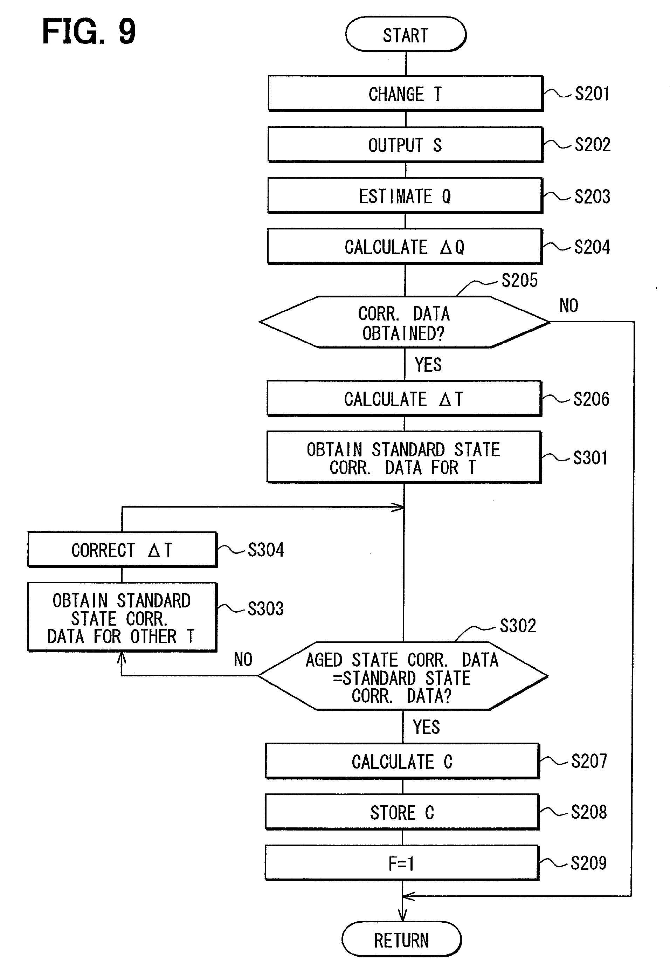

Fig. 9 is a flowchart showing processing steps of the correction value calculation processing according to the present embodiment.

Steps S201 to Step S204 change the interval time T and output the injection signal S to the injector 11, and also estimate the actual fuel injection amount Q at that time as in the processing shown in Fig. 6. The injection amount deviation ΔQ is calculated from the difference between the estimated injection amount Q and the injection amount command value QC. Step S205 determines whether the obtainment of the correlation data between the deviation time of the interval time T and the injection amount deviation ΔQ is completed. If the answer to Step S205 is YES, the process goes to Step S206. If the answer to Step S205 is NO, the correction value calculation processing shown in Fig. 9 is ended.

Step S206 calculates the deviation time ΔT of the interval time T for bringing the injection amount deviation ΔQ to zero. Then, Step S301 obtains the correlation data in the standard state corresponding to the interval time T calculated at Step S104 of Fig. 5. At that time, if the correlation data in the standard state corresponding to the interval time T in the present operation state is not prepared, the correlation data are obtained by converting the correlation data in the standard state that is obtained beforehand based on the pulsating mode of the fuel pressure P. Then, Step S302 determines whether the correlation data in the aged state are the same as the correlation data in the standard state obtained at Step S301. If the answer to Step S302 is YES, the process goes to Step S207. If the answer to Step S302 is NO, it is determined that the interval time T deviates largely, and the process goes to Step S303.

Step S303 obtains the correlation data in the standard state corresponding to the interval time T of the other section providing the same fuel pressure as of the start of the latter fuel injection. If the correlation data in the standard state corresponding to the interval time of the other section is not obtained yet, the correlation data in the standard state corresponding to the interval time of the section as the object of this time are obtained by converting the correlation data in the standard state obtained at Step S301 based on the pulsating mode of the fuel pressure P. Then, Step S304 corrects the control deviation time ΔT based on the interval time T as the object of this time. Then, the process goes to Step S302 to determine whether the correlation data in the aged state are the same as the correlation data in the standard state.

Steps S207 to S209 obtain the correction value C of the injection amount command value QC based on the calculated control deviation time ΔT and write the correction value C into the backup memory. Step S209 sets the completion flag F at one (F=1). Thus, the correction value calculation processing is ended.

The present embodiment exerts following excellent effects.

The correlation data in the standard state corresponding to the interval times providing the same fuel pressure as of the start of the latter injection are obtained in accordance with the sections of the pulsating mode of the fuel pressure respectively. The control deviation time is calculated based on the multiple correlation data in the standard state. Thus, the control deviation time can be calculated appropriately even if the interval time deviates largely and the fuel pressure as of the start of the latter injection coincides with the fuel pressure as of the adjustment.

The correlation data in the standard state corresponding to the interval time of the section as the object of this time is obtained by converting the correlation data in the standard state, which are obtained in advance, based on the pulsating mode of the fuel pressure. The correlation data in the standard state in the other operation state are obtained likewise through the conversion. Thus, the amount of the correlation data in the standard state, which are obtained in the adjustment in advance, can be reduced. Thus, man-hours necessary for the adjustment can be reduced.

The above-described embodiments may be modified as follows.

In the above-described embodiments, the time difference between the standard state and the aged state in the case where the fuel injection amount deviation becomes zero is used as the control deviation time. Alternatively, the time differences with respect to the multiple fuel injection amount deviations may be obtained respectively and the control deviation time may be obtained based on the time differences. In this case, the change of the injection characteristics can be grasped more accurately. Thus, the injection amount command value can be corrected more appropriately.

In the first example embodiment, the correlation in the standard state is obtained in advance, and the correlation in the aged state is obtained and the control deviation time is calculated. Alternatively, the deviation time of the interval time for bringing the injection amount deviation to zero may be obtained from the correlation data in the aged state shown in Fig. 3. Then, the injection amount command value may be corrected by using the deviation time as the control deviation time. The deviation time of the interval time bringing the injection amount deviation to zero is the control deviation time as the deviation of the interval time. By correcting the injection amount command value based on the control deviation time, the excess or deficiency of the fuel injection amount due to the deviation of the interval time can be reduced. Thus, the deterioration of the fuel injection accuracy can be inhibited. In this case, there is no need to obtain the correlation between the interval time and the injection amount deviation in the standard state in advance.

In the second example embodiment, the control deviation time is calculated based on the correlation data in the standard state and the correlation data in the aged state corresponding to one interval time. In the case where the interval time is on a border of the sections, the control deviation time should be preferably calculated based on the correlation data in the standard state corresponding to the interval times of the sections before and after the border. Thus, the control deviation time can be calculated more appropriately compared to the case where the control deviation time is calculated based the correlation data in the standard state corresponding to only one interval time.

In the above example embodiments, the injection amount command value is corrected as the correction of the control parameter of the injector 11. Alternatively, correction for reducing the deviation in the interval time as the control parameter with respect to that of the actual fuel injection may be performed. In this case, the interval time is corrected based on the control deviation time. Alternatively, the map used when the interval time is calculated may be corrected based on the engine operation conditions. By performing the correction to reduce the deviation in the interval time, the desired fuel injection can be performed.

In the above example embodiments, the double injection is performed in the multiple injection control. In the case where three or more fuel injections are performed in one combustion cycle as the multiple injection control, the double injection should be preferably performed when the correction value calculation processing is performed. The pulsation of the fuel pressure in the common rail accompanying the fuel injection is caused by the injection action of the injector 11. As the number of the fuel injections increases, the pulsation of the fuel pressure due to the injection action exerts a greater influence in a synergistic manner, complicating the behavior of the fuel pressure. Therefore, by performing the double injection when the correction value calculation processing is performed, the influence on the behavior of the fuel pressure can be limited to those of the former injection and the latter injection. As a result, the control deviation time can be calculated accurately.

In the above-described embodiments, the correction of the control parameter of the fuel injection control using the injector 11 is performed. The present invention can be applied to an abnormality diagnosis device of the injector 11. For example, in the correction value calculation processing shown in Fig. 6, after Step S209, it is determined whether the control deviation time ΔT calculated at Step S206 is "equal to or greater than" a predetermined value. If the answer is YES, a diagnosis function turns on a warning lamp to inform the driver of an abnormality and writes warning data indicating that the deterioration of the injector 11 is in an abnormal level into an abnormality diagnosis log memory such as the EEPROM or the standby RAM. If the answer is NO, the processing is ended immediately. Thus, the excessive increase of the deviation of the interval time due to the progression of the aging of the injector 11 can be averted, and the abnormal operation of the engine 10 due to unintended fuel injection can be averted.

The present invention should not be limited to the disclosed embodiments, but may be implemented in many other ways without departing from the scope of the invention, as defined by the appended claims.

A controller of a common rail fuel injection system changes an interval time between injections of multiple injection and estimates an actual fuel injection amount as of the change. The controller calculates an injection amount deviation as a difference between the estimated fuel injection amount and an injection amount command value. Based on correlation data between a deviation time of the interval time and the injection amount deviation, the controller calculates a time difference in the deviation time for bringing the injection amount deviation to zero between a standard state and an aged state as a control deviation time. The controller corrects the injection amount command value based on the control deviation time. Thus, deterioration of fuel injection control accuracy due to the deviation in the interval time can be inhibited.

## Claims

1. A controller of a common rail fuel injection system that accumulates high-pressure fuel in a common rail (12) and supplies the accumulated fuel to an engine (10) through a fuel injection valve (11), the controller performing multiple injection control for injecting the fuel multiple times during one combustion cycle of the engine (10) with the use of one fuel injection valve, the controller comprising:
an estimating means (M1, M2, S203) for estimating an actual fuel injection amount (Q) injected from the fuel injection valve (11);
a calculating means (M3, S206) for calculating a control deviation time (ΔT) of an interval time (T) between adjacent injections of the multiple injection based on a difference between the actual fuel injection amount (Q) estimated by the estimating means (M1, M2, S203) and a present injection amount command value (QC); and
a correcting means (S108, S207, S208, S304) for correcting a control parameter of the fuel injection control using the fuel injection valve (11) based on the control deviation time (ΔT) of the interval time (T) calculated by the calculating means, wherein
the calculating means (M3, S206) includes:
a first means (S201) for changing the interval time (T) by a predetermined time; and
a second means (S204) for calculating an injection amount deviation (ΔQ) as a difference between the fuel injection amount (Q) estimated by the estimating means when the interval time (T) is changed and the injection amount command value (QC) and for calculating the control deviation time (ΔT) of the interval time (T) based on a correlation between a changed time of the interval time (T) and the injection amount deviation (ΔQ), wherein
the correlation between the changed time of the interval time (T) and the injection amount deviation (ΔQ) is obtained in a predetermined standard state,
the standard state being a state in which there is no deviation in the interval time (T) at the time when the control parameter of the fuel injection control is adjusted, and
the calculating means (M3, S206) calculates the control deviation time based on the correlation as of the calculation and the correlation in the standard state,
**characterized in that**
the correlation is defined in advance for each one of multiple interval times providing the same fuel pressure in the common rail as of a start of a latter injection out of the two adjacent injections, and
the calculating means (M3, S206) calculates the control deviation time (ΔT) based on the correlation corresponding to the actual interval time (T) and the defined correlations corresponding to the multiple interval times.

2. The controller as in claim 1, wherein
the calculating means (M3, S206) calculates the changed time of the interval time (T) for bringing the injection amount deviation (ΔQ) to zero based on the correlation between the changed time and the injection amount deviation (ΔQ) and employs the changed time as the control deviation time (ΔT).

3. The controller as in claim 2, wherein
the calculating means (M3, S206) includes a third means (S302) for discriminating the correlation of the interval time (T) having the same tendency as the correlation of the actual interval time (T) out of the correlations of the multiple interval times (T) and calculates the control deviation time (ΔT) based on the discriminated correlation in the standard state and the correlation corresponding to the actual interval time (T).

4. The controller as in claim 2 or 3, wherein
the correlation corresponding to at least one of the multiple interval times (T) is defined in advance, and
the correlation corresponding to another interval time is obtained from the defined correlation based on a pulsating mode of the fuel pressure (P),
the pulsating mode of the fuel pressure (P) being substantially decided by the injection amount (Q) of a former injection and the fuel pressure (P) as of the former injection, the former injection being a pilot injection.

5. The controller as in claim 4, wherein
the correlations of the multiple interval times (T) are defined in accordance with sections among positive peaks and negative peaks of the pulsating mode of the fuel pressure (P) in the common rail.

6. The controller as in any one of claims 2 to 5, further comprising:
an obtaining means (S101) for obtaining operation state information of the engine (10), wherein
the correlation in the operation state is obtained from the defined correlations based on the operation state information obtained by the obtaining means (S101).

7. The controller as in any one of claims 1 to 6, further comprising:
a taking means (18) for taking in rotation speed of the engine (10), wherein
the estimating means (M1, M2, S203) estimates the actual fuel injection amount (Q) by performing filtering processing of the rotation speed taken in by the taking means (18) based on a combustion frequency of the engine (10) or information corresponding to the combustion frequency.

8. The controller as in any one of claims 1 to 7, wherein
the correcting means performs correction of the injection amount command value as the correction of the control parameter.

9. The controller as in any one of claims 1 to 8, wherein
the correcting means (S108, S207, S208, S304) performs correction of the interval time (T) as the correction of the control parameter.

10. The controller as in any one of claims 1 to 9, wherein
the controller performs double injection for injecting the fuel two times during one combustion cycle of the engine (10) with the use of one fuel injection valve (11) when the calculating means (M3, S206) calculates the control deviation time (ΔT).

11. The controller as in any one of claims 1 to 10, wherein
the engine (10) is a multi-cylinder engine,
the calculating means (M3, S206) calculates the control deviation time for each fuel injection valve (11) mounted in each cylinder, and
the correcting means (S108, S207, S208, S304) corrects the control parameter for each cylinder.

12. The controller as in any one of claims 1 to 11, further comprising:
a determining means (S209) for determining that an abnormality is caused in the fuel injection valve (11) when the control deviation time (ΔT) calculated by the calculating means (M3, S206) is equal to or greater than a predetermined value.

## Patentansprüche

1. Regler eines Common-Rail-Kraftstoffeinspritzsystems, das einen Hochdruckkraftstoff in einer Common-Rail (12) sammelt und den gesammelten Kraftstoff durch ein Kraftstoffeinspritzventil (11) zu einer Maschine (10) zuführt, wobei der Regler eine Mehrfach-Einspritzsteuerung zum Einspritzen des Kraftstoffes mehrere Male während eines Verbrennungszyklus der Maschine (10) unter Verwendung eines Kraftstoffeinspritzventils durchführt, wobei der Regler umfasst:
ein Schätzmittel (M1, M2, S203) zum Schätzen einer von dem Kraftstoffeinspritzventil (11) eingespritzten, tatsächlichen Kraftstoffeinspritzmenge (Q);
ein Berechnungsmittel (M3, S206) zum Berechnen einer Steuerabweichungszeit (ΔT) einer Zwischenzeit (T) zwischen angrenzenden Einspritzungen der Mehrfacheinspritzung ausgehend von einem Unterschied zwischen der durch das Schätzmittel (M1, M2, S203) geschätzten tatsächlichen Kraftstoffeinspritzmenge (Q) und einem vorliegenden Einspritzmengenanweisungswert (QC); und
ein Korrekturmittel (S108, S207, S208, S304) zum Korrigieren eines Steuerparameters des Kraftstoffeinspritzreglers unter Verwendung des Kraftstoffeinspritzventils (11) ausgehend von der Steuerabweichungszeit (ΔT) der durch das Berechnungsmittel berechneten Zwischenzeit (T), wobei
das Berechnungsmittel (M3, S206) hat:
ein erstes Mittel (S201) zum Ändern der Zwischenzeit (T) um eine vorbestimmte Zeit; und
ein zweites Mittel (S204) zum Berechnen einer Einspritzmengenabweichung (ΔQ) als einen Unterschied zwischen der durch das Schätzmittel geschätzten Kraftstoffeinspritzmenge (Q), wenn die Zwischenzeit (T) geändert ist, und dem Einspritzmengenanweisungswert (QC), und zum Berechnen der Steuerabweichungszeit (ΔT) der Zwischenzeit (T) ausgehend von einer Korrelation zwischen einer geänderten Zeit der Zwischenzeit (T) und der Einspritzmengenabweichung (ΔQ), wobei
die Korrelation zwischen der geänderten Zeit der Zwischenzeit (T) und der Einspritzmengenabweichung (ΔQ) in einem vorbestimmten Standardzustand erhalten wird,
der Standardzustand ein Zustand ist, in dem keine Abweichung in der Zwischenzeit (T) zu der Zeit stattfindet, zu der der Steuerparameter der Kraftstoffeinspritzsteuerung angepasst ist, und
das Berechnungsmittel (M3, S206) die Steuerabweichungszeit ausgehend von der Korrelation hinsichtlich der Berechnung und der Korrelation an dem Standardzustand berechnet,
**dadurch gekennzeichnet, dass**
die Korrelation im Voraus für jede von Mehrfachzwischenzeiten definiert ist, die den gleichen Kraftstoffdruck in der Common-Rail wie von einem Beginn einer letzteren Einspritzung aus den zwei angrenzenden Einspritzungen bereitstellt, und
das Berechnungsmittel (M3, S206) die Steuerabweichungszeit (ΔT) ausgehend von der Korrelation entsprechend der tatsächlichen Zwischenzeit (T) und den definierten Korrelationen entsprechend der mehreren Zwischenzeiten berechnet.

2. Regler wie in Anspruch 1, wobei
das Berechnungsmittel (M3, S206) die geänderte Zeit der Zwischenzeit (T) berechnet, um die Einspritzmengenabweichung (ΔQ) ausgehend von der Korrelation zwischen der geänderten Zeit und der Einspritzmengenabweichung (ΔQ) auf null zu bringen, und die geänderte Zeit als Steuerabweichungszeit (ΔT) einsetzt.

3. Regler wie in Anspruch 2, wobei
das Berechnungsmittel (M3, S206) ein drittes Mittel (S302) zum Unterscheiden der Korrelation der Zwischenzeit (T) hat, die dieselbe Tendenz wie die Korrelation der tatsächlichen Zwischenzeit (T) aus den Korrelationen der mehreren Zwischenzeiten (T) aufweist, und die Steuerabweichungszeit (ΔT) ausgehend von der unterschiedenen Korrelation in dem Standardzustand und der Korrelation entsprechend der tatsächlichen Zwischenzeit (T) berechnet.

4. Regler wie in Anspruch 2 oder 3, wobei
die Korrelation entsprechend zumindest einer der mehreren Zwischenzeiten (T) im Voraus definiert ist, und
die Korrelation entsprechend einer anderen Zwischenzeit von der definierten Korrelation ausgehend von einer Schwankungsbetriebsart des Kraftstoffdrucks (P) erhalten wird,
die Schwankungsbetriebsart des Kraftstoffdrucks (P) im Wesentlichen durch die Einspritzmenge (Q) einer früheren Einspritzung und dem Kraftstoffdruck (P) wie von der früheren Einspritzung entschieden wird, wobei die frühere Einspritzung eine Führungseinspritzung ist.

5. Regler wie in Anspruch 4, wobei
die Korrelationen der mehreren Zwischenzeiten (T) gemäß Abschnitten unter positiven Spitzen und negativen Spitzen der Schwankungsbetriebsart des Kraftstoffdrucks (P) in der Common-Rail definiert sind.

6. Regler wie in einem der Ansprüche 2 bis 5, außerdem mit:
einem Erhaltungsmittel (S101) zum Erhalten einer Betriebszustandinformation der Maschine (10), wobei
die Korrelation in dem Betriebszustand von den definierten Korrelationen ausgehend von der Betriebszustandinformation erhalten wird, die durch das Erhaltungsmittel (S101) erhalten wird.

7. Regler wie in einem der Ansprüche 1 bis 6, außerdem mit:
einem Erfassungsmittel (18) zum Erfassen einer Drehzahl der Maschine (10), wobei
das Schätzmittel (M1, M2, S203) die tatsächliche Kraftstoffeinspritzmenge (Q) durch Durchführen einer Filterverarbeitung der durch das Erfassungsmittel (18) erfassten Drehzahl ausgehend von einer Verbrennungsfrequenz der Maschine (10) oder einer Information entsprechend der Verbrennungsfrequenz durchführt.

8. Regler wie in einem der Ansprüche 1 bis 7, wobei
das Korrekturmittel eine Korrektur des Einspritzmengenanweisungswerts als Korrektur des Steuerparameters durchführt.

9. Regler wie in einem der Ansprüche 1 bis 8, wobei
das Korrekturmittel (S108, S207, S208, S304) die Korrektur der Zwischenzeit (T) als die Korrektur des Steuerparameters durchführt.

10. Regler wie in einem der Ansprüche 1 bis 9, wobei
der Regler eine Doppeleinspritzung zum Einspritzen des Kraftstoffs zweimal während eines Verbrennungszyklus der Maschine (10) mit der Verwendung von einem Kraftstoffeinspritzventil (11) durchführt, wenn das Berechnungsmittel (M3, S206) die Steuerabweichungszeit (ΔT) berechnet.

11. Regler wie in einem der Ansprüche 1 bis 10, wobei
die Maschine (10) eine Mehrzylindermaschine ist,
das Berechnungsmittel (M3, S206) die Regelabweichungszeit für jedes in jedem Zylinder montierte Kraftstoffeinspritzventil (11) berechnet, und
das Korrekturmittel (S108, S207, S208, S304) den Steuerparameter für jeden Zylinder korrigiert.

12. Regler wie in einem der Ansprüche 1 bis 11, außerdem mit:
einem Bestimmungsmittel (S209) zum Bestimmen, dass eine Abnomalität in dem Kraftstoffeinspritzventil (11) verursacht ist, wenn die durch das Berechnungsmittel (M3, S206) berechnete Steuerabweichungszeit (ΔT) gleich wie oder größer als ein vorbestimmter Wert ist.

## Revendications

1. Contrôleur d'un système d'injection de carburant à rampe commune qui accumule un combustible haute pression dans une rampe commune (12) et alimente le carburant accumulé à un moteur (10) à travers une soupape d'injection de carburant (11), le contrôleur effectuant un contrôle multiple de l'injection pour injecter le carburant plusieurs fois pendant un cycle de combustion du moteur (10), en utilisant une soupape d'injection de carburant, le contrôleur comprenant :
un moyen d'estimation (M1, M2, S203) pour estimer une quantité d'injection de carburant effective (Q) injectée depuis la soupape d'injection de carburant (11) ;
un moyen de calcul (M3, S206) pour calculer un temps de déviation de contrôle (ΔT) d'un intervalle de temps (T) entre des injections adjacentes de l'injection multiple, sur la base d'une différence entre la quantité d'injection de carburant effective (Q) estimée par le moyen d'estimation (M1, M2, S203) et une valeur de commande de la quantité d'injection actuelle (QC) ; et
un moyen de correction (S108, S207, S208, S304) pour corriger un paramètre de contrôle du contrôle d'injection de carburant en utilisant la soupape d'injection de carburant (11) sur la base du temps de déviation de contrôle (ΔT) du temps d'intervalle (T) calculé par le moyen de calcul, dans lequel
le moyen de calcul (M3, S206) comprend :
un premier moyen (S201) pour changer le temps d'intervalle (T) d'un temps prédéterminé ; et
un second moyen (S204) pour calculer une déviation de la quantité d'injection (ΔQ) comme étant la différence entre la quantité d'injection de carburant (Q) estimée par le moyen d'estimation quand le temps d'intervalle (T) a changé et la valeur de commande de la quantité d'injection (QC) et pour calculer le temps de déviation de contrôle (ΔT) du temps d'intervalle (T), sur la base d'une corrélation entre un temps modifié du temps d'intervalle (T) et de l'écart de quantité d'injection (ΔQ), dans lequel
la corrélation entre le temps modifié du temps d'intervalle (T) et l'écart de la quantité d'injection (ΔQ) est obtenu dans un état standard prédéterminé,
l'état standard étant un état dans lequel il n'existe aucun écart dans le temps d'intervalle (T) au moment où le paramètre de contrôle du contrôle d'injection de carburant est ajusté, et
le moyen de calcul (M3, S206) calcule le temps de déviation de contrôle, sur la base de la corrélation comme étant le calcul et la corrélation dans l'état standard,
**caractérisé en ce que**
la corrélation est définie par avance pour chacun des multiples temps d'intervalle fournissant la même pression de carburant dans la rampe commune qu'au démarrage de la dernière injection sur les deux injections adjacentes, et
le moyen de calcul (M3, S206) calcule le temps de déviation de contrôle (ΔT) sur la base de la corrélation correspondant au temps d'intervalle effectif (T) et des corrélations définies correspondant aux multiples temps d'intervalle.

2. Contrôleur selon la revendication 1, dans lequel
le moyen de calcul (M3, S206) calcule le temps modifié du temps d'intervalle (T) pour amener la déviation de quantité d'injection (ΔQ) à zéro, sur la base de la corrélation entre le temps modifié et la déviation de quantité d'injection (ΔQ) et ils emploient le temps modifié comme temps de déviation de contrôle (ΔT).

3. Contrôleur selon la revendication 2, dans lequel
le moyen de calcul (M3, S206) comprend un troisième moyen (S302) pour distinguer la corrélation du temps d'intervalle (T) ayant la même tendance que la corrélation du temps d'intervalle effectif (T) parmi les corrélations des multiples temps d'intervalle (T) et calcule le temps de déviation de contrôle (ΔT) sur la base de la corrélation distinguée à l'état standard et la corrélation correspondant au temps d'intervalle effectif (T).

4. Contrôleur selon la revendication 2 ou 3, dans lequel
la corrélation correspondant à au moins un des multiples temps d'intervalle (T) est définie par avance, et
la corrélation correspondant à un autre temps d'intervalle est obtenue à partir de la corrélation définie sur la base d'un mode de pulsation de la pression de carburant (P),
le mode de pulsation de la pression de combustible (P) étant sensiblement décidé par la quantité d'injection (Q) d'une injection précédente et la pression de carburant (P) à partir d'une injection précédente, l'injection précédente étant une injection pilote.

5. Contrôleur selon la revendication 4, dans lequel
les corrélations des multiples temps d'intervalle (T) sont définies conformément aux sections parmi des pics positifs et des pics négatifs du mode de pulsation de la pression de carburant (P) dans la rampe commune.

6. Contrôleur selon l'une quelconque des revendications 2 à 5, comprenant en outre :
un moyen d'obtention (S101) pour obtenir des informations sur l'état de fonctionnement du moteur (10), dans lequel
la corrélation dans l'état de fonctionnement est obtenue à partir des corrélations définies sur la base des informations sur l'état de fonctionnement obtenues par le moyen d'obtention (S101).

7. Contrôleur selon l'une quelconque des revendications 1 à 6, comprenant en outre :
un moyen de prise (18) pour prendre la vitesse de rotation du moteur (10), dans lequel
le moyen d'estimation (M1, M2, S203) estime la quantité d'injection de carburant effective (Q) en effectuant un traitement de filtration de la vitesse de rotation prise par le moyen de prise (18) sur la base d'une fréquence de combustion du moteur (10) ou d'informations correspondant à la fréquence de combustion.

8. Contrôleur selon l'une quelconque des revendications 1 à 7, dans lequel
le moyen de correction effectue la correction de la valeur de commande de la quantité d'injection comme correction du paramètre de contrôle.

9. Contrôleur selon l'une quelconque des revendications 1 à 8, dans lequel
le moyen de correction (S108, S207, S208, S304) effectue la correction du temps d'intervalle (T) comme la correction du paramètre de contrôle.

10. Contrôleur selon l'une quelconque des revendications 1 à 9, dans lequel
le contrôleur effectue une double injection pour injecter le carburant deux fois pendant un cycle de combustion du moteur (10), en utilisant une soupape d'injection de carburant (11) quand le moyen de calcul (M3, S206) calcule le temps de déviation de contrôle (ΔT).

11. Contrôleur selon l'une quelconque des revendications 1 à 10, dans lequel
le moteur (10) est un moteur multicylindres,
le moyen de calcul (M3, S206) calcule le temps de déviation de contrôle pour chaque soupape d'injection de carburant (11) montée dans chaque cylindre, et
le moyen de correction (S108, S207, S208, S304) corrige le paramètre de contrôle pour chaque cylindre.

12. Contrôleur selon l'une quelconque des revendications 1 à 11, comprenant en outre :
un moyen de détermination (S209) pour déterminer qu'une anomalie est provoquée dans la soupape d'injection de carburant (11) quand le temps de déviation de contrôle (ΔT) calculé par le moyen de calcul (M3, S206) est égal ou supérieur à une valeur prédéterminée.
